# EUROPEAN PATENT SPECIFICATION

(11) **EP 4 574 653 B1**
(45) Date of publication and mention of the grant of the patent: **19.08.2026**
(21) Application number: 23218872.2
(22) Date of filing: 20.12.2023
(51) Int. Cl.: B64C 9/02, B64C 9/22

(54) **WING FOR AN AIRCRAFT**
FLÜGEL FÜR EIN FLUGZEUG
AILE POUR UN AÉRONEF

(43) Date of publication of application: 25.06.2025
(73) Proprietor: Airbus Operations GmbH, 21129 Hamburg (DE)
(72) Inventor: Lorenz, Florian, 21129 Hamburg (DE); Schlipf, Bernhard, 21129 Hamburg (DE)
(74) Representative: Airbus Germany

(56) References cited:
- EP-A1- 3 539 864
- EP-A1- 4 101 754
- EP-B1- 2 282 930

## Description

The present invention relates to a wing for an aircraft and a high lift assembly associated with said wing, and an aircraft comprising said wing.

Documents EP 4 101 754 A1, EP 3 539 864 A1 and EP 2 282 930 B1 are each presenting a wing for an aircraft comprising a high lift assembly. The high lift assemblies presented in these documents each comprise a connection assembly comprising an elongate track.

The described wing for an aircraft comprises a main wing and a high lift assembly, the high lift assembly comprising a high lift body and a connection assembly movably connecting the high lift body to the main wing such that the high lift body is movable between a retracted position and at least one extended position (e.g. movable relative to the main wing). The high lift body may be or comprise a leading edge slat or a trailing edge flap of a wing for an aircraft.

The connection assembly comprises an elongate track that extends along a track longitudinal axis between a first end and a second end and has an intermediate portion between the first and second ends. At least one, or both, of the first end and the intermediate portion of the elongate track is/are mounted to the high lift body.

The first end may correspond to a front end of the connection assembly, e.g. the end positioned towards the intended direction of forward motion of the wing during flight of an aircraft. Alternatively, the first end may correspond to a rear end of the connection assembly, e.g. the end positioned aware from the intended direction of forward motion of the wind during flight of an aircraft. Where the high lift body is or comprises a leading edge slat, then the first end may correspond to the front end of the connection assembly. Where the high lift body is or comprises a trailing edge flap, then the first end may correspond to the rear end of the connection assembly.

The first end of the elongate track may be preferably mounted to either a leading edge slat, or to a trailing edge flap by any appropriate means, e.g. by a spherical bearing or bearings. The second end of the elongate track may be preferably mounted to the main wing by a roller bearing, as will be described, such that the elongate track and either the leading edge slat or the trailing edge flap are moveable relative to the main wing. The elongate track may take the form of, for example, a C-shape, such that its surface lies opposite the circumferential surface of the roller bearing, wherein the distance between an upper surface and a lower surface of the elongate track is larger than a diameter of a roller bearing, such that the roller bearing may engage only one of the upper surface or the lower surface of the elongate track at any one time. I.e. the distance between the upper and lower surfaces of the elongate track is selected such that a clearance is provided between the roller bearing and either the upper surface or the lower surface of the elongate track, such that the roller bearing cannot engage with the upper and lower surfaces of the elongate track at the same time, thereby becoming wedged therein.

At least one of the second end and the intermediate portion of the track is mounted to the main wing by a roller bearing such that the track is movable along the track longitudinal axis, for example along a predefined path e.g. on the track longitudinal axis, such as between a stowed position which the high lift body is in the retracted position and a deployed position when the high lift body is in one of the at least one extended positions.

The roller bearing comprises at least one roller unit that is mounted to the main wing and is rotatable about a roller rotation axis. Additionally, the roller bearing comprises a circumferential roller surface that engages an engagement surface provided on the elongate track. Preferably, the engagement surface may be provided on the intermediate portion and/or the second end of the elongate track. The roller unit may be mounted to the main wing in any appropriate way, for example may be fixed or fastened to the main wing, for example may be bolted to the main wing.

Wings for aircraft having connection assemblies that movably connect a high lift body to the main wing are known to comprise roller bearings. In an ideal scenario, a conventional roller bearing would be provided to enable rolling movement of the high lift body relative to the wings of an aircraft, via a connection assembly. A conventional roller bearing may be generally cylindrical in shape and may comprise a curved roller surface that is defined by a constant diameter along the length of the roller bearing. Ideally loaded, the roller surface of the conventional roller forms a line-shaped contact region between the roller bearing an engagement surface, with the loading distributed evenly along this contact region. However, in cases of angular misalignment between the axis of the roller and the engagement surface, the length of the contact region may be significantly reduced, possibly even to a point load, resulting in large stress concentrations in the contact region. Axial misalignment between the roller and the engagement surface is a reasonably common occurrence, and can result in the damaging of one or both of the roller bearing and the engagement surface. Further, during high loading, deformations within the assembly may exacerbate the problem of misalignment or, in some cases, create a misalignment issue where none existed under zero or low loading.

One possible way to avoid this problem is to use a crowned roller bearing, where the diameter of the roller bearing is variable along its length, such that the roller surface is convex in shape in the longitudinal direction of the bearing, the convex surface having predetermined constant radius along the length thereof. The user of a crowned roller bearing means that small alignments of the axis of the roller bearing relative to an engagement surface still enable normal, or at least functional engagement of the roller bearing with the engagement surface. However, this solution has the drawback that the contact region between the bearing and an engagement surface is still severely limited in size. This solution therefore assists to avoid point loading, but still results in a reasonable degree of stress concentration in the contact region. Thus, over time such bearings can still result in damage to either the roller bearing or the engagement surface. There is therefore a need to provide an aircraft wing having an arrangement that is able to better distribute loading between a bearing and a corresponding engagement surface, so as to avoid damage thereto, and increase the lifespan thereof.

Therefore, the object of the present invention is to provide a simple, lightweight and low maintenance design of a wing and associated high lift assembly.

The object is achieved by a wing according to claim 1 and by a high lift assembly according to claim 13. The object is achieved in that the elongate track comprises an upper and a lower engagement surface that extend non-parallel to the lower engagement surface in a lateral direction relative to the track longitudinal axis (e.g. that extend non-parallel when viewed in a direction that is parallel to the roller rotation axis). Providing these surfaces with a non-parallel orientation means that the position of the roller units relative to the roller bearing can be easily "set" on the engagement surface, therefore eliminating problems of misalignment (e.g. angular misalignment) between the roller unit and the engagement surface and avoiding unexpected stress concentrations on both the roller unit and the engagement surface.

The elongate track comprises an upper flange portion, a lower flange portion, and at least one web portion connecting the upper and lower flange portions. The upper engagement surface is provided on the upper flange portion and the lower engagement surface is provided on the lower flange portion. The roller unit is arranged in a recess between the upper and lower flange portion and engages the engagement surface provided at the upper flange portion and/or the lower flange portion. As such, the elongate track may comprise a C-shaped cross-section, an I-shaped cross-section or an H-shaped cross section.

The upper flange and the lower flange may each comprise a proximal end at which they may be connected to the at least one web portion and a distal end, opposite the proximal end. The proximal ends of the upper and lower flanges may be located closer together than the distal ends of the upper and lower flanges.

The upper engagement surface and the lower engagement surface may extend at an oblique angle relative to the at least one web portion.

The elongate track may have a profile (e.g. I-, Π-, double-C-profile or double-T-profile) such that a first recess may be formed between upper and lower flange portions at a first side of the web portion, and a second recess may be formed between upper and lower flange portions at a second side of the web portion opposite the first side. The roller unit may comprise a first roller element and a second roller element. The first roller element may be arranged in the first recess and the second roller element may be arranged in the second recess. The first and second roller elements may be arranged coaxially and/or may have the same radius.

The roller bearing may comprise at least one roller support for mounting the at least one roller unit to the main wing. The at least one roller support may be configured to deform so as to vary the angle of the roller rotation axis relative to the elongate track. The at least one roller support may be configured to deform such that the roller rotation axis is parallel to at least one of the upper engagement surface and the lower engagement surface. As such, under higher loading, the roller support may be able to deform so as to change the alignment of the roller unit relative to the upper and lower engagement surfaces. This may have the effect of increasing the contact area between the roller unit and the engagement surface with which the roller unit is in contact, thereby spreading the load between the roller unit and the engagement surface over a larger area in instances of higher loading.

Each of the at least one roller support may be in the form of an elongate support.

The roller unit may comprise a bearing surface configured to contact the upper engagement surface and/or the lower engagement surface. The bearing surface may comprise a variable radius of curvature in the direction of the roller rotation axis when viewed in a cross-section parallel to the roller rotation axis.

The bearing surface may comprises two axial ends and a midpoint located between each of the axial ends. The radius of curvature of the bearing surface in the direction of the roller rotation axis may be greater at the midpoint than at the axial ends.

The radius of curvature of the bearing surface may gradually increase from each of the axial ends towards the midpoint.

The upper bearing surface and the lower bearing surface may each comprise a first and a second portion. The first portion of the upper bearing surface may extend relative to the first portion of the lower bearing surface at a first angle, and the second portion of the upper bearing surface may extend relative to the second portion of the lower bearing surface at a second angle, the first angle being greater than the second angle.

The wing may comprise an upper and a lower flange portion and at least one web portion connecting the upper and lower flange portions, wherein the first portion of the upper bearing surface and the first portion of the lower bearing surface may extend relative to the at least one web portion at an oblique (e.g. an obtuse) angle greater than the angle at which the second portion of the upper and lower bearing surface extends relative to the at least one web portion.

A further aspect of the present invention relates to a high lift assembly as has been described in the preceding paragraphs in relation to the wing. The high lift assembly may be in the form of a leading edge high lift assembly, or may be in the form of a trailing edge high lift assembly.

The high lift assembly comprises a high lift body, e.g. a leading edge slat or a trailing edge flap, and a connection assembly configured for movably connecting the high lift body to the main wing, for example such that the high lift body is movable relative to the main wing, such as between a retracted position and at least one extended position. The connection assembly comprises an elongate track that extends along a track longitudinal axis between a first end and a second end and has an intermediate portion between the first and second ends. As previously described in reference to the first aspect, the first end may correspond to a front end of the connection assembly (in which case the rear end would correspond to the second end, as is also the case with the first described aspect) or the first end may correspond to a rear end of the connection assembly (in which case the front end would correspond to the second end, as is also the case with the first described aspect).

Another aspect relates to an aircraft comprising a wing as described in relation to a previously described aspect, comprising a high lift assembly also as described in a previous aspect.
- Figure 1: is a perspective view of an aircraft, showing a wing of the aircraft;
- Figure 2: illustrates various views of connection assembly in an aircraft wing;
- Figure 3: illustrates a cross-section of the connection assembly;
- Figure 4A: is a partial cross-section of the connection assembly under zero or low loading;
- Figure 4B: is a partial cross-section of the connection assembly under high loading;
- Figure 5: is a partial cross-section of an alternative connection assembly design;
- Figure 6: is a cross-sectional view showing stress concentration in roller units.

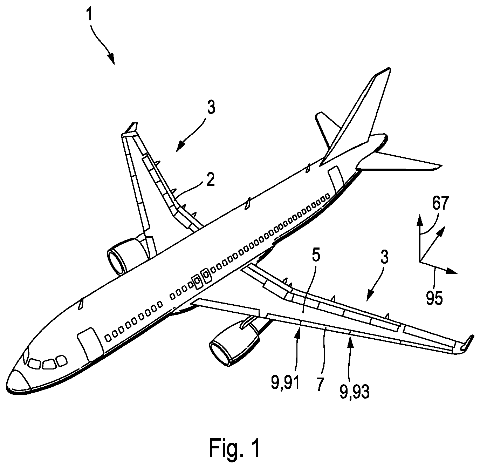

In Fig. 1 an aircraft 1 according to an embodiment of the present invention is illustrated. The aircraft 1 comprises a wing 3 that is formed according to an embodiment of the present invention.

As shown in Fig. 1, the connection assembly 9 relates to a first connection assembly 91, and the wing 3 comprises a second connection assembly 93 connecting the slat 7 to the main wing 5 in a position spaced apart from the first connection assembly 91 in a wing span direction 95, and wherein the second connection assembly 93 is formed as the first connection assembly 91. Additionally illustrated in Fig. 1 is a wing thickness direction 67. While, in Fig. 1, the connection assembly 9 is illustrated as connecting slat 7 to the main wing 5, it should also be understood that the connection assembly 9 may be used to connect a trailing edge flap 2 to the wing 5 of an aircraft.

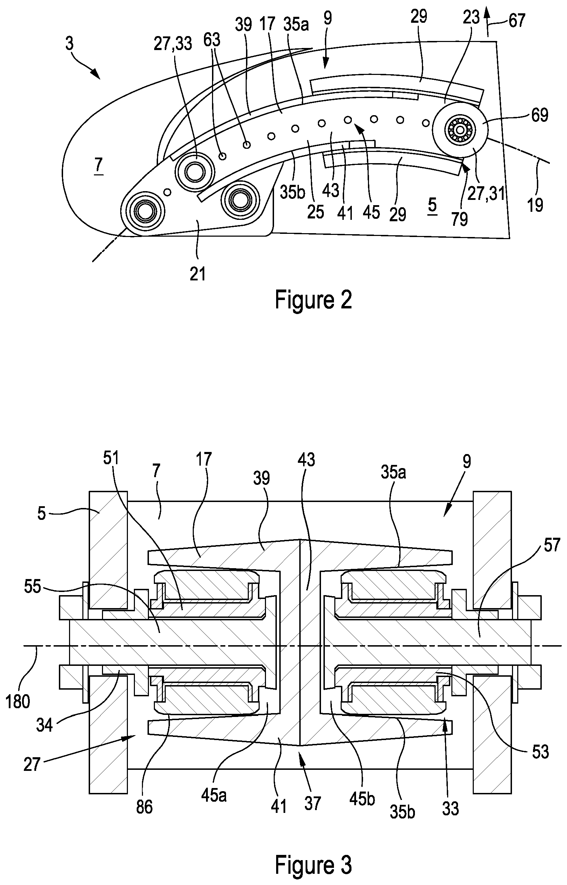

Fig. 2 shows an example of a connection assembly 9 of a wing for an aircraft, which is configured to connect a slat to the main wing of an aircraft. The connection assembly 9 may be used in combination with a wing 1 similar to that as described in Fig. 1, where the wing 1 comprises a main wing 5, a slat 7, and a connection assembly 9 (according to the present disclosure) movably connecting the slat 7 to the main wing 5, such that the slat 7 is movable between a retracted position and at least one extended position.

In Figure 2, the connection assembly 9 comprises a slat track 17 that extends along a track longitudinal axis 19 between a front end 21 and a rear end 23 and has an intermediate portion 25 between the front and rear ends 21, 23. The front end 21 of the slat track 17 is fixedly mounted to the slat 7. The rear end 23 and the intermediate portion 25 of the slat track 17 are movably mounted to the main wing 5 by a roller bearing 27 such that the slat track 17 is movable along the track longitudinal axis 19. In this example, the roller bearing 27 comprises a guide rail 29 fixedly mounted to the main wing 5 and a rear roller unit 31 fixedly mounted to the rear end 23 of the slat track 17 and engaging the guide rail 29. The roller bearing 27 comprises a forward roller unit 33 that is fixedly mounted to the main wing 5 and that engages an engagement surface 35a, 35b provided at the intermediate portion 25 of the slat track 17. As shown in Figs. 3-5, the slat track 17 has a profile 37 comprising an upper flange portion 39, a lower flange portion 41 and at least one web portion 43 connecting upper and lower flange portions 39, 41. The forward roller unit 33 is arranged in a recess 45 between upper and lower flange portions 39, 41 and may engage the engagement surface 35a provided at the upper flange portion 39 or the lower engagement surface 35b provided at the lower flange portion 41.

As shown in Fig. 3, for example, the profile 37 of the slat track 17 provides a first recess 45a formed between the upper and lower flange portions 39, 41 at a first side 47 of the web portion 43, and a second recess 45b formed between the upper and lower flange portions 39, 41 at a second side 49 of the web portion 43 opposite the first side 47. The forward roller unit 33 comprises a first roller element 51 and a second roller element 53. The first roller element 51 is arranged in the first recess 45a and the second roller element 53 is arranged in the second recess 45b. First and second roller elements 51, 53 may be arranged coaxially (as is the case in this example) and have the same radius. However, it should be noted that in some examples, the first and second roller elements 51, 53 may comprise a degree of misalignment (e.g. angular misalignment), which may result in a non-coaxial arrangement of the first and second roller elements 51, 53. The first roller element 51 is mounted on a first shaft 55 and the second roller element 53 is mounted on a second shaft 57 separate from the first shaft 55. First and second shafts 55, 57 are independently supported by the main wing 5.

From Fig. 3, it is clearly visible that the slat track 17 (may also be termed the elongate track in the context of this disclosure) comprises an upper engagement surface 35a that is non-parallel to the corresponding lower engagement surface 35b. Here, both the upper engagement surface 35a and the lower engagement surface 35b face inwards towards a recess 45a, 45b. The upper and lower flange portions 39, 41 are connected to the web portion 43 at a proximal end, and extend in a direction lateral to the track longitudinal axis 19 towards a distal end such that the distance (e.g. the closest distance) between the upper and lower flange portions 39, 41 at the proximal end is less than the distance between the upper and lower flange portions at the distal end. In this example, the minimum distance between the upper and lower flange portions 39, 41 is at the proximal end thereof, while the maximum distance between the upper and lower flange portions 39, 41 occurs at the proximal end thereof.

The shafts 55, 57 may be connected to the main wing 5 by any appropriate means, for example by a fastener and washer, as is illustrated here. In addition, a threaded bushing 34 is positioned between each shaft 55, 57 and the main wing 5. The threaded bushing may provide a degree of adjustability to the roller bearing 27 by permitting the distance between the first and second roller elements 51, 53 and the main wing 5 to be adjusted, for example by turning of the threaded bushing 34. It should be noted that a similar function may be provided by another component, such as by using shims. As the upper and lower engagement surfaces 35a, 35b are non-parallel, and also extend from the web portion 43 at an oblique angle (here, an obtuse angle), adjustment of the distance between the roller elements 51, 53 and the main wing 5 (and therefore also between the roller elements 51, 53 and the web portion 43) has the effect of allowing the clearance between the roller and the upper and lower engagement surfaces 35a, 35b to be selected. The configuration of the upper and lower engagement surfaces 35a, 35b may additionally facilitate the calculation of forces in the bearing 27 and engagement surfaces 35a, 35b, since the point of contact between the bearing 27 and the engagement surfaces 35a, 35b may be more easily identified or predicted.

The first and second roller elements 51, 53 are illustrated in Figure 3 under low or zero loading, and the first and second shafts 55, 57 are illustrated in a non-deformed state. Each of the first and second shafts 55, 57 comprises a roller rotation axis 180 about which the relevant roller element 51, 53 rotates. In an ideal scenario, the first and second shafts 55, 57 may be aligned such that the roller rotation axes 180 of each shaft 55, 57 are coaxial. However, in reality, the roller rotation axis 180 of each of the shafts 55, 57 may be slightly misaligned, for example due to manufacturing tolerances, because of difficulties in positioning the shafts 55, 57 in the main wing 5, or the like. In this case, the configuration of the upper and lower engagement surfaces 35a, 35b may permit a degree of misalignment between the shafts 55, 57 to be absorbed, for example by positioning one roller element 51 closer to the main wing 5 than another roller element 53, whilst still being able to maintain the same contact area between both roller elements 51, 53 and the corresponding engagement surface 35a, 35b.

Also illustrated in Figure 3 is the shape of the roller surface 86 (may also be termed bearing surface) of each roller element 51, 53. Here, the bearing surface comprises a variable radius of curvature along the axial length thereof (e.g. in the direction of the roller rotation axis 180). In particular, the radius of curvature at each axial end of the bearing surface 86 is greater than the radius of curvature at the axial midpoint of the bearing surface 86. Here, the radius of curvature of the bearing surface 86 is illustrated as increasing gradually from the axial end towards the midpoint of the bearing surface. Having a variable radius of curvature of the bearing surface, and in particular having a radius of curvature that gradually increases from the axial end to the midpoint of the bearing surface may assist to increase the contact surface area between the bearing surface 86 and the upper and lower engagement surfaces 35a, 35b, for example in instances where the roller rotation axis 180 is not parallel with the engagement surface 35a, 35b, such as in low or zero loading conditions, as is illustrated in Figure 3.

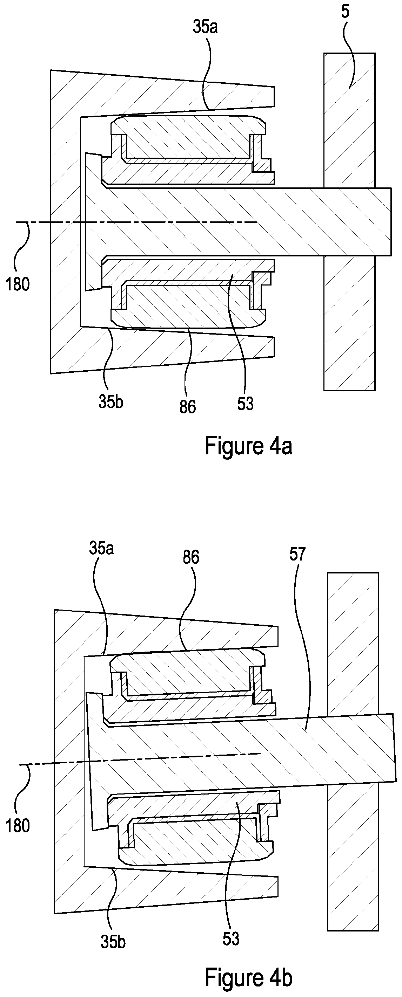

Figures 4A and 4B illustrate an example of a roller element 53 under low or zero loading (Figure 4A) and under high loading (Figure 4B). The example of Figure 4A is the same as has been illustrated in Figure 3. Here, the roller rotation axis 180 is non-parallel to both of the upper and lower engagement surfaces 35a, 35b, and as such the bearing surface 86 contacts the upper engagement surface 35a (although depending on the direction of the loading on the bearing or wing, this may be the lower engagement surface 35b) at a location between the midpoint and the axial end of the bearing surface 86. Here, the contact area between the bearing surface 86 and the engagement surface 35a is smaller than if the contact were to be between the midpoint of the bearing surface 86 and the engagement surface 35a, although larger than the contact area would be in the case of contact between a flat bearing surface 86 (or a crowned bearing surface) at a point between the midpoint and axial end of the bearing surface 86. Since the loading in this case is low, the relatively small contact area between the bearing surface 86 and the engagement surface 35a may not be of major concern, as the wear on both the bearing surface 86 and the engagement surface 35a may be low due to the low loading.

In Figure 4B, the loading is higher, which has caused the shaft 57 to deform such that the roller rotation axis 180 of the shaft is now parallel with the engagement surface 35a. This has the effect of realigning the bearing surface 86 relative to the engagement surface 35a such that the contact area between the bearing surface 86 and the engagement surface 35a occurs at the midpoint of the bearing surface 86. Since the radius of curvature at the midpoint of the bearing surface 86 is larger than that in the example of Figure 4A, the loading on the bearing is spread over a larger area, reducing the pressure (e.g. the hertzian pressure) on the bearing surface 86 and the engagement surface 35a, despite the higher force, and thereby reducing the wear on both the bearing surface 86 and the engagement surface 35a, and increasing the lifespan of both. This advantage is realised through both the fact that the engagement surfaces 35a, 35b have a non-parallel orientation, and also that the shaft 57 is configured to deform under high loading, thereby permitting an increase in the contact area between the bearing surface 86 and the engagement surface 35a when needed. It should also be noted that, as the force increases (for example to a level between that illustrated in Figures 4A and 4B) the gradual deformation of the shaft will cause the contact area between the bearing surface 86 and the engagement surface 35b to gradually shift towards the midpoint of the bearing surface 86, and to gradually increase as the radius of curvature of the bearing surface increases towards the midpoint of the bearing surface 86. In some cases, the midpoint may have a radius of curvature of infinity (i.e. may be flat and parallel to the roller rotation axis 180).

In addition to increasing the contact area between the bearing surface 86 and the engagement surface 35a, the length of the lever arm is also reduced, thereby also reducing stresses at the contact point between the shaft 57 and the main wing 5.

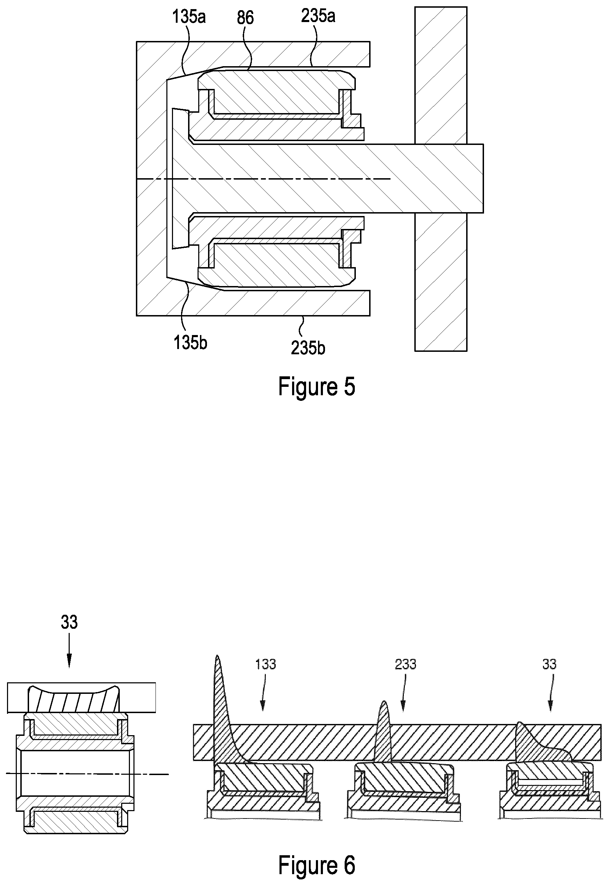

Figure 5 provides an example in which the upper bearing surface comprises a first and a second portion 135a, 235a, and the lower bearing surface comprises a first and a second portion 235a, 235b. Here, the first portion of the upper surface 135a and the first portion of the lower surface 135b are non-parallel and extend relative to each other at a first angle, while the second portion of the upper surface 235a and the second portion of the lower surface 235b extend, also non-parallel, and at a second angle relative to each other, where the second angle is different and lesser than the first angle. As such, the second portions are closer to being parallelly oriented than the first portions. In this example, while the situation in the case of zero or low loading may be similar to as described in Figures 3 and 4A, a lesser load may be required in the case of the high-load scenario. Since the angle of the second portions 235a, 235b relative to the roller rotation axis 180 is reduced compared to that of the first portions 135a, 135b, less deformation (and therefore a smaller force) will be required in order to bring the bearing surface 86 into contact with the relevant second portion 235a, 235b, thereby bringing the midpoint of the bearing surface into contact with the engagement surface 235a, 235b, and increasing the contact area therebetween. The example of Figure 5 may therefore be desirable in cases where loading may be known to be lower, or in cases where less loading is required in order to increase the contact area, and therefore pressure (e.g. the hertzian pressure), between the bearing surface 86 and the engagement surface 35a, 35b.

In both the example of Figures 4A and 4B and in the example of Figure 5, an effect provided by the proposed design of the elongate track 17 and/or the bearing is a reduction in the hertzian contact pressure between the engagement surface 35a, 35b of the track 17 and the bearing 27. In many cases, the sizing criteria for the roller unit 33 is based on the calculated hertzian contact pressure, and thus the proposed design facilitates a reduction in the size of the bearing owing to the reduced hertzian contact pressure, thus providing a space-efficient solution. Similarly, the hertzian contact pressure may also be a key factor in deciding which material the track 17 should be made from. Therefore, a reduction in the hertzian contact pressure may also permit a wider selection of materials from which the track 17 may be produced.

An illustration of contact stresses in four differing roller units 33, 133, 233, 333 is illustrated in Figure 6. In the first case, the roller unit 33 is illustrated as being oriented such that its roller rotation axis is parallel to the engagement surface. In each other case, the illustrated roller units 133, 233, 333 are oriented such that the roller rotation axis thereof is misaligned relative to the engagement surface 135. On the left side of Figure 7 is illustrated the roller unit 33 which has a mainly flat engagement surface. In this ideal case, the loading is spread evenly across the bearing surface. However, in non-ideal cases (e.g. where the roller rotation axis is misaligned with the engagement surface) having a flat bearing surface can cause high load concentration and even point loads, which is undesirable, as is shown in roller unit 133. This roller is known in the state of the art. The roller unit 233 additionally forms part of the state of the art, although in this case the roller unit 233 is a crowned roller unit. In the case of the crowned roller unit 233, the diameter of the roller bearing is variable along its length, such that the roller surface is convex in shape in the longitudinal direction of the bearing, the convex surface having predetermined constant radius along the length thereof. Finally, the third roller unit 33 corresponds to the disclosure of the present invention, whereby the radius of curvature gradually increases towards the midpoint of the bearing surface. As is illustrated, although there is an increase in loading towards one end of the bearing surface, there is also a significant reduction in the peak load as compared to the other examples due to the spreading of the loading over a greater contact area.

## Claims

1. A wing (3) for an aircraft (1), comprising
a main wing (5) and
a high lift assembly comprising
a high lift body (7), and
a connection assembly (9) movably connecting the high lift body (7) to the main wing (5), such that the high lift body (7) is movable between a retracted position and at least one extended position,
wherein the connection assembly (9) comprises an elongate track (17) that extends along a track longitudinal axis (19) between a first end and a second end and has an intermediate portion between the first and second ends,
wherein the first end and/or the intermediate portion of the track is mounted to the high lift body (7),
wherein the second end and/or the intermediate portion of the track (17) is mounted to the main wing (5) by a roller bearing (27) such that the track is movable along the track longitudinal axis (19),
wherein the roller bearing (27) comprises at least one roller unit (33) that is mounted to the main wing (5) rotatable about a roller rotation axis (180), and that has a circumferential roller surface (86) engaging an engagement surface (35a, 35b) provided on the track (17),
wherein the track (17) comprises an upper engagement surface (35a) and a lower engagement surface (35b);
wherein the track (17) comprises an upper flange portion (39) and a lower flange portion (41) and at least one web portion (43) connecting the upper and lower flange portions (39, 41), wherein the upper engagement surface (35a) is provided on the upper flange portion (39) and the lower engagement surface (35b) is provided on the lower flange portion (41); and
wherein the roller unit (33) is arranged in a recess between the upper and lower flange portion (39, 41) and engages the engagement surface (35a) provided at the upper flange portion (39) and/or the lower flange portion (41);
**characterized in that**
the upper engagement surface (35a) extends non-parallel to the lower engagement surface (35b) in a lateral direction relative to the track longitudinal axis (19).

2. The wing (2) according to claim 1, wherein the upper flange (39) and the lower flange (41) each comprise a proximal end at which they are connected to the at least one web portion and a distal end, opposite the proximal end, and wherein the proximal ends of the upper and lower flanges (39, 41) are located closer together than the distal ends of the upper and lower flanges (39, 41).

3. The wing (2) according to claim 1 or 2, wherein the upper engagement surface (35a) and the lower engagement surface (35b) extend at an oblique angle relative to the at least one web portion (43).

4. The wing (2) according to any preceding claim, wherein the elongate track (17) has a profile such that a first recess (45a) is formed between upper and lower flange portions (39, 41) at a first side of the web portion (43), and a second recess (45b) is formed between upper and lower flange portions (39, 41) at a second side of the web portion (43) opposite the first side (45b);
wherein the roller unit (33) comprises a first roller element (51) and a second roller element (53),
wherein the first roller element (51) is arranged in the first recess (45a) and the second roller element (53) is arranged in the second recess (45b), and
wherein first and second roller elements (51, 53) have the same radius.

5. The wing (2) according to any preceding claim, wherein the roller bearing (27) comprises at least one roller support (57) for mounting the at least one roller unit (33) to the main wing (5), the at least one roller support (57) being configured to deform so as to vary the angle of the roller rotation axis (180) relative to the elongate track (17).

6. The wing (2) according to claim 5, wherein the at least one roller support (57) is configured to deform such that the roller rotation axis (180) is parallel to at least one of the upper engagement surface (35a) and the lower engagement surface (35b).

7. The wing (2) according to claim 5 or 6, wherein each of the at least one roller support (57) is in the form of an elongate support.

8. The wing (2) according to any preceding claim, wherein the roller surface (86) of the at least one roller unit (33) is configured to contact the upper engagement surface (35a) and/or the lower engagement surface (35b), wherein the roller surface (86) comprises a variable radius of curvature in the direction of the roller rotation axis (180) when viewed in a cross-section parallel to the roller rotation axis (180).

9. The wing (2) according to claim 8, wherein the roller surface (86) comprises two axial ends and a midpoint located between each of the axial ends, wherein the radius of curvature of the roller surface (86) in the direction of the roller rotation axis (180) is greater at the midpoint than at the axial ends.

10. The wing (2) according to claim 9, wherein the radius of curvature of the roller surface (86) gradually increases from each of the axial ends towards the midpoint.

11. The wing (2) according to any preceding claim, wherein the upper bearing surface (35a) and the lower bearing surface (35b) each comprise a first and a second portion (135a, 235a, 135b, 235b), the first portion (135a) of the upper bearing surface (35a) extending relative to the first portion (135b) of the lower bearing surface (35b) at a first angle, and the second portion (235a) of the upper bearing surface (35a) extending relative to the second portion (235b) of the lower bearing surface (35b) at a second angle, the first angle being greater than the second angle.

12. The wing (2) according to claim 11, comprising an upper and a lower flange portion (39, 41) and at least one web portion (43) connecting the upper and lower flange portions (39, 41), wherein the first portion (135a) of the upper bearing surface (35a) and the first portion (135b) of the lower bearing surface (35b) extend relative to the at least one web portion at an oblique angle greater than the angle at which the second portion (235a, 235b) of the upper and lower bearing surface (35a, 35b) extends relative to the at least one web portion (43).

13. A high lift assembly for the wing (2) according to any of claims 1 to 12, the high lift assembly comprising
a high lift body (7), and
a connection assembly (9) configured for movably connecting the high lift body (7) to the main wing (5),
wherein the connection assembly (9) comprises an elongate track (17) that extends along a track longitudinal axis (19) between a first end and a second end and has an intermediate portion between the first and second ends,
wherein the first end and/or the intermediate portion of the track (17) is mounted to the high lift body (7),
wherein the second end and/or the intermediate portion of the track is configured to be mounted to the main wing (5) by a roller bearing (27) such that the track (17) is movable along the track longitudinal axis (19),
wherein the roller bearing (27) comprises at least one roller unit (33) that is configured to be mounted to the main wing (5) rotatable about a roller rotation axis (180), and that has a circumferential roller surface (86) configured for engaging an engagement surface (35) provided on the track (17),
wherein the track (17) comprises an upper engagement surface (35a) and a lower engagement surface (35b);
wherein the track (17) comprises an upper flange portion (39) and a lower flange portion (41) and at least one web portion (43) connecting the upper and lower flange portions (39, 41), wherein the upper engagement surface (35a) is provided on the upper flange portion (39) and the lower engagement surface (35b) is provided on the lower flange portion (41); and
wherein the roller unit (33) is arranged in a recess between the upper and lower flange portion (39, 41) and engages the engagement surface (35a) provided at the upper flange portion (39) and/or the lower flange portion (41);
**characterized in that**
the upper engagement surface (35a) extends non-parallel to the lower engagement surface (35b) in a lateral direction relative to the track longitudinal axis (19).

14. An aircraft (1) comprising a wing (2) according to any of claims 1 to 12, comprising a high lift assembly according to claim 13.

## Patentansprüche

1. Eine Tragfläche (3) für ein Flugzeug (1), umfassend
eine Haupttragfläche (5) und
eine Hochauftriebsanordnung, umfassend
einen Hochauftriebskörper (7), und
eine Verbindungsanordnung (9), die den Hochauftriebskörper (7) beweglich mit der Haupttragfläche (5) verbindet, so dass der Hochauftriebskörper (7) zwischen einer eingefahrenen Position und mindestens einer ausgefahrenen Position bewegbar ist,
wobei die Verbindungsanordnung (9) eine längliche Schiene (17) umfasst, die sich entlang einer Schienenlängsachse (19) zwischen einem ersten Ende und einem zweiten Ende erstreckt und einen Zwischenabschnitt zwischen dem ersten und dem zweiten Ende aufweist,
wobei das erste Ende und/oder der Zwischenabschnitt der Schiene an dem Hochauftriebskörper (7) montiert ist,
wobei das zweite Ende und/oder der Zwischenabschnitt der Schiene (17) durch ein Rollenlager (27) derart an der Haupttragfläche (5) montiert ist, dass die Schiene entlang der Schienenlängsachse (19) bewegbar ist,
wobei das Rollenlager (27) mindestens eine Rolleneinheit (33) umfasst, die an der Haupttragfläche (5) um eine Rollendrehachse (180) drehbar montiert ist und eine Rollenumfangsfläche (86) aufweist, die in eine an der Schiene (17) bereitgestellte Eingriffsfläche (35a, 35b) eingreift,
wobei die Schiene (17) eine obere Eingriffsfläche (35a) und eine untere Eingriffsfläche (35b) umfasst,
wobei die Schiene (17) einen oberen Flanschabschnitt (39) und einen unteren Flanschabschnitt (41) und mindestens einen Stegabschnitt (43), der den oberen und den unteren Flanschabschnitt (39, 41) verbindet, umfasst,
wobei die obere Eingriffsfläche (35a) an dem oberen Flanschabschnitt (39) bereitgestellt ist und die untere Eingriffsfläche (35b) an dem unteren Flanschabschnitt (41) bereitgestellt ist; und
wobei die Rolleneinheit (33) in einer Aussparung zwischen dem oberen und dem unteren Flanschabschnitt (39, 41) angeordnet ist und in die Eingriffsfläche (35a) eingreift, die an dem oberen Flanschabschnitt (39) und/oder dem unteren Flanschabschnitt (41) bereitgestellt ist;
**dadurch gekennzeichnet, dass** sich die obere Eingriffsfläche (35a) nicht parallel zu der unteren Eingriffsfläche (35b) in einer Querrichtung relativ zu der Schienenlängsachse (19) erstreckt.

2. Die Tragfläche (2) nach Anspruch 1, wobei der obere Flansch (39) und der untere Flansch (41) jeweils ein proximales Ende, an dem sie mit dem mindestens einen Stegabschnitt verbunden sind, und ein dem proximalen Ende gegenüberliegendes distales Ende umfassen, und wobei die proximalen Enden des oberen und des unteren Flansches (39, 41) näher beieinander liegen als die distalen Enden des oberen und des unteren Flansches (39, 41).

3. Die Tragfläche (2) nach Anspruch 1 oder 2, wobei sich die obere Eingriffsfläche (35a) und die untere Eingriffsfläche (35b) in einem schiefen Winkel relativ zu dem mindestens einen Stegabschnitt (43) erstrecken.

4. Die Tragfläche (2) nach einem der vorhergehenden Ansprüche, wobei die längliche Schiene (17) ein solches Profil aufweist, dass eine erste Aussparung (45a) zwischen dem oberen und dem unteren Flanschabschnitt (39, 41) an einer ersten Seite des Stegabschnitts (43) gebildet ist und eine zweite Aussparung (45b) zwischen dem oberen und dem unteren Flanschabschnitt (39, 41) an einer der ersten Seite gegenüberliegenden zweiten Seite des Stegabschnitts (43) gebildet ist;
wobei die Rolleneinheit (33) ein erstes Rollenelement (51) und ein zweites Rollenelement (53) umfasst, wobei das erste Rollenelement (51) in der ersten Aussparung (45a) angeordnet ist und das zweite Rollenelement (53) in der zweiten Aussparung (45b) angeordnet ist, und wobei das erste und das zweite Rollenelement (51, 53) den gleichen Radius aufweisen.

5. Die Tragfläche (2) nach einem der vorhergehenden Ansprüche, wobei das Rollenlager (27) mindestens einen Rollenträger (57) zur Montage der mindestens einen Rolleneinheit (33) an der Haupttragfläche (5) umfasst, wobei der mindestens eine Rollenträger (57) konfiguriert ist, sich zu verformen, um den Winkel der Rollendrehachse (180) relativ zu der länglichen Schiene (17) zu variieren.

6. Die Tragfläche (2) nach Anspruch 5, wobei der mindestens eine Rollenträger (57) konfiguriert ist, sich so zu verformen, dass die Rollendrehachse (180) parallel zu mindestens einer von der oberen Eingriffsfläche (35a) und der unteren Eingriffsfläche (35b) ist.

7. Die Tragfläche (2) nach Anspruch 5 oder 6, wobei jeder des mindestens einen Rollenträgers (57) in Form eines länglichen Trägers vorliegt.

8. Die Tragfläche (2) nach einem der vorhergehenden Ansprüche, wobei die Rollenfläche (86) der mindestens einen Rolleneinheit (33) konfiguriert ist, die obere Eingriffsfläche (35a) und/oder die untere Eingriffsfläche (35b) zu berühren, wobei die Rollenfläche (86) in Richtung der Rollendrehachse (180), betrachtet in einem Querschnitt parallel zur Rollendrehachse (180), einen variablen Krümmungsradius aufweist

9. Die Tragfläche (2) nach Anspruch 8, wobei die Rollenfläche (86) zwei axiale Enden und einen Mittelpunkt umfasst, der zwischen jedem der axialen Enden angeordnet ist, wobei der Krümmungsradius der Rollenfläche (86) in Richtung der Rollendrehachse (180) am Mittelpunkt größer ist als an den axialen Enden

10. Die Tragfläche (2) nach Anspruch 9, wobei der Krümmungsradius der Rollenfläche (86) von jedem der axialen Enden in Richtung des Mittelpunkts allmählich zunimmt

11. Die Tragfläche (2) nach einem der vorhergehenden Ansprüche, wobei die obere Lagerfläche (35a) und die untere Lagerfläche (35b) jeweils einen ersten und einen zweiten Abschnitt (135a, 235a, 135b, 235b) umfassen, wobei sich der erste Abschnitt (135a) der oberen Lagerfläche (35a) relativ zu dem ersten Abschnitt (135b) der unteren Lagerfläche (35b) in einem ersten Winkel erstreckt, und sich der zweite Abschnitt (235a) der oberen Lagerfläche (35a) relativ zu dem zweiten Abschnitt (235b) der unteren Lagerfläche (35b) in einem zweiten Winkel erstreckt, wobei der erste Winkel größer ist als der zweite Winkel.

12. Die Tragfläche (2) nach Anspruch 11, umfassend einen oberen und einen unteren Flanschabschnitt (39, 41) und mindestens einen Stegabschnitt (43), der den oberen und unteren Flanschabschnitt (39, 41) verbindet, wobei sich der erste Abschnitt (135a) der oberen Lagerfläche (35a) und der erste Abschnitt (135b) der unteren Lagerfläche (35b) relativ zu dem mindestens einen Stegabschnitt in einem schiefen Winkel erstrecken, der größer ist als der Winkel, in dem sich der zweite Abschnitt (235a, 235b) der oberen und unteren Lagerfläche (35a, 35b) relativ zu dem mindestens einen Stegabschnitt (43) erstreckt

13. Eine Hochauftriebsanordnung für die Tragfläche (2) nach einem der Ansprüche 1 bis 12, wobei die Hochauftriebsanordnung umfasst
einen Hochauftriebskörper (7), und
eine Verbindungsanordnung (9), die dafür konfiguriert ist, den Hochauftriebskörper (7) beweglich mit der Haupttragfläche (5) zu verbinden,
wobei die Verbindungsanordnung (9) eine längliche Schiene (17) umfasst, die sich entlang einer Schienenlängsachse (19) zwischen einem ersten Ende und einem zweiten Ende erstreckt und einen Zwischenabschnitt zwischen dem ersten und zweiten Ende aufweist,
wobei das erste Ende und/oder der Zwischenabschnitt der Schiene (17) an dem Hochauftriebskörper (7) montiert ist,
wobei das zweite Ende und/oder der Zwischenabschnitt der Schiene konfiguriert ist, durch ein Rollenlager (27) an der Haupttragfläche (5) so montiert zu werden, dass die Schiene (17) entlang der Schienenlängsachse (19) bewegbar ist,
wobei das Rollenlager (27) mindestens eine Rolleneinheit (33) umfasst, die konfiguriert ist, an der Haupttragfläche (5) um eine Rollendrehachse (180) drehbar montiert zu werden, und die eine Rollenumfangsfläche (86) aufweist, die konfiguriert ist, in eine an der Schiene (17) bereitgestellte Eingriffsfläche (35) einzugreifen,
wobei die Schiene (17) eine obere Eingriffsfläche (35a) und eine untere Eingriffsfläche (35b) umfasst,
wobei die Schiene (17) einen oberen Flanschabschnitt (39) und einen unteren Flanschabschnitt (41) und mindestens einen Stegabschnitt (43), der den oberen und den unteren Flanschabschnitt (39, 41) verbindet, umfasst,
wobei die obere Eingriffsfläche (35a) an dem oberen Flanschabschnitt (39) bereitgestellt ist und die untere Eingriffsfläche (35b) an dem unteren Flanschabschnitt (41) bereitgestellt ist; und
wobei die Rolleneinheit (33) in einer Aussparung zwischen dem oberen und dem unteren Flanschabschnitt (39, 41) angeordnet ist und in die Eingriffsfläche (35a) eingreift, die an dem oberen Flanschabschnitt (39) und/oder dem unteren Flanschabschnitt (41) bereitgestellt ist;
**dadurch gekennzeichnet, dass** sich die obere Eingriffsfläche (35a) nicht parallel zu der unteren Eingriffsfläche (35b) in einer Querrichtung relativ zu der Schienenlängsachse (19) erstreckt.

14. Ein Flugzeug (1) umfassend eine Tragfläche (2) nach einem der Ansprüche 1 bis 12, umfassend eine Hochauftriebsanordnung nach Anspruch 13.

## Revendications

1. Une aile (3) pour un aéronef (1), comprenant
une voilure principale (5) et
un ensemble hypersustentateur comprenant
un corps hypersustentateur (7), et
un ensemble de connexion (9) connectant de manière mobile le corps hypersustentateur (7) à la voilure principale (5), de sorte que le corps hypersustentateur (7) est mobile entre une position rétractée et au moins une position déployée,
dans laquelle l'ensemble de connexion (9) comprend un rail allongé (17) qui s'étend le long d'un axe longitudinal de rail (19) entre une première extrémité et une seconde extrémité et présente une partie intermédiaire entre les première et seconde extrémités,
dans laquelle la première extrémité et/ou la partie intermédiaire du rail est montée sur le corps hypersustentateur (7),
dans laquelle la seconde extrémité et/ou la partie intermédiaire du rail (17) est montée sur la voilure principale (5) par un palier à roulement (27) de sorte que le rail est mobile le long de l'axe longitudinal de rail (19),
dans laquelle le palier à roulement (27) comprend au moins une unité de rouleau (33) qui est montée sur la voilure principale (5) de manière rotative autour d'un axe de rotation de rouleau (180), et qui a une surface circonférentielle de rouleau (86) s'engageant avec une surface d'engagement (35a, 35b) prévue sur le rail (17), dans laquelle le rail (17) comprend une surface d'engagement supérieure (35a) et une surface d'engagement inférieure (35b),
dans laquelle le rail (17) comprend une partie de semelle supérieure (39) et une partie de semelle inférieure (41) et au moins une partie d'âme (43) connectant les parties de semelle supérieure et inférieure (39, 41),
dans laquelle la surface d'engagement supérieure (35a) est prévue sur la partie de semelle supérieure (39) et la surface d'engagement inférieure (35b) est prévue sur la partie de semelle inférieure (41) ; et
dans laquelle l'unité de rouleau (33) est agencée dans un évidement entre la partie de semelle supérieure et inférieure (39, 41) et s'engage avec la surface d'engagement (35a) prévue au niveau de la partie de semelle supérieure (39) et/ou la partie de semelle inférieure (41) ;
**caractérisée en ce que** la surface d'engagement supérieure (35a) s'étend de manière non parallèle à la surface d'engagement inférieure (35b) dans une direction latérale par rapport à l'axe longitudinal de rail (19).

2. L'aile (2) selon la revendication 1, dans laquelle la semelle supérieure (39) et la semelle inférieure (41) comprennent chacune une extrémité proximale au niveau de laquelle elles sont connectées à la au moins une partie d'âme et une extrémité distale, opposée à l'extrémité proximale, et dans laquelle les extrémités proximales des semelles supérieure et inférieure (39, 41) sont situées plus près l'une de l'autre que les extrémités distales des semelles supérieure et inférieure (39, 41).

3. L'aile (2) selon la revendication 1 ou 2, dans laquelle la surface d'engagement supérieure (35a) et la surface d'engagement inférieure (35b) s'étendent selon un angle oblique par rapport à la au moins une partie d'âme (43).

4. L'aile (2) selon l'une quelconque des revendications précédentes, dans laquelle le rail allongé (17) a un profil tel qu'un premier évidement (45a) est formé entre les parties de semelle supérieure et inférieure (39, 41) sur un premier côté de la partie d'âme (43), et un second évidement (45b) est formé entre les parties de semelle supérieure et inférieure (39, 41) sur un second côté de la partie d'âme (43) opposé au premier côté (45b) ;
dans laquelle l'unité de rouleau (33) comprend un premier élément de rouleau (51) et un second élément de rouleau (53),
dans laquelle le premier élément de rouleau (51) est agencé dans le premier évidement (45a) et le second élément de rouleau (53) est agencé dans le second évidement (45b), et dans laquelle les premier et second éléments de rouleau (51, 53) ont le même rayon.

5. L'aile (2) selon l'une quelconque des revendications précédentes, dans laquelle le palier à roulement (27) comprend au moins un support de rouleau (57) pour monter la au moins une unité de rouleau (33) sur la voilure principale (5), le au moins un support de rouleau (57) étant configuré pour se déformer de manière à faire varier l'angle de l'axe de rotation de rouleau (180) par rapport au rail allongé (17).

6. L'aile (2) selon la revendication 5, dans laquelle le au moins un support de rouleau (57) est configuré pour se déformer de sorte que l'axe de rotation de rouleau (180) est parallèle à au moins l'une de la surface d'engagement supérieure (35a) et de la surface d'engagement inférieure (35b).

7. L'aile (2) selon la revendication 5 ou 6, dans laquelle chacun du au moins un support de rouleau (57) se présente sous la forme d'un support allongé.

8. L'aile (2) selon l'une quelconque des revendications précédentes, dans laquelle la surface de rouleau (86) de la au moins une unité de rouleau (33) est configurée pour contacter la surface d'engagement supérieure (35a) et/ou la surface d'engagement inférieure (35b), dans laquelle la surface de rouleau (86) comprend un rayon de courbure variable dans la direction de l'axe de rotation de rouleau (180) lorsqu'elle est vue dans une coupe transversale parallèle à l'axe de rotation de rouleau (180).

9. L'aile (2) selon la revendication 8, dans laquelle la surface de rouleau (86) comprend deux extrémités axiales et un point médian situé entre chacune des extrémités axiales, dans laquelle le rayon de courbure de la surface de rouleau (86) dans la direction de l'axe de rotation de rouleau (180) est plus grand au niveau du point médian qu'au niveau des extrémités axiales.

10. L'aile (2) selon la revendication 9, dans laquelle le rayon de courbure de la surface de rouleau (86) augmente progressivement depuis chacune des extrémités axiales vers le point médian.

11. L'aile (2) selon l'une quelconque des revendications précédentes, dans laquelle la surface de palier supérieure (35a) et la surface de palier inférieure (35b) comprennent chacune une première et une seconde partie (135a, 235a, 135b, 235b), la première partie (135a) de la surface de palier supérieure (35a) s'étendant par rapport à la première partie (135b) de la surface de palier inférieure (35b) selon un premier angle, et la seconde partie (235a) de la surface de palier supérieure (35a) s'étendant par rapport à la seconde partie (235b) de la surface de palier inférieure (35b) selon un second angle, le premier angle étant supérieur au second angle.

12. L'aile (2) selon la revendication 11, comprenant une partie de semelle supérieure et une partie de semelle inférieure (39, 41) et au moins une partie d'âme (43) connectant les parties de semelle supérieure et inférieure (39, 41), dans laquelle la première partie (135a) de la surface de palier supérieure (35a) et la première partie (135b) de la surface de palier inférieure (35b) s'étendent par rapport à la au moins une partie d'âme selon un angle oblique supérieur à l'angle selon lequel la seconde partie (235a, 235b) des surfaces de palier supérieure et inférieure (35a, 35b) s'étend par rapport à la au moins une partie d'âme (43).

13. Un ensemble hypersustentateur pour l'aile (2) selon l'une quelconque des revendications 1 à 12, l'ensemble hypersustentateur comprenant
un corps hypersustentateur (7), et
un ensemble de connexion (9) configuré pour connecter de manière mobile le corps hypersustentateur (7) à la voilure principale (5),
dans lequel l'ensemble de connexion (9) comprend un rail allongé (17) qui s'étend le long d'un axe longitudinal de rail (19) entre une première extrémité et une seconde extrémité et présente une partie intermédiaire entre les première et seconde extrémités,
dans lequel la première extrémité et/ou la partie intermédiaire du rail (17) est montée sur le corps hypersustentateur (7),
dans lequel la seconde extrémité et/ou la partie intermédiaire du rail est configurée pour être montée sur la voilure principale (5) par un palier à roulement (27) de sorte que le rail (17) est mobile le long de l'axe longitudinal de rail (19),
dans lequel le palier à roulement (27) comprend au moins une unité de rouleau (33) qui est configurée pour être montée sur la voilure principale (5) de manière rotative autour d'un axe de rotation de rouleau (180), et qui a une surface circonférentielle de rouleau (86) configurée pour s'engager avec une surface d'engagement (35) prévue sur le rail (17),
dans lequel le rail (17) comprend une surface d'engagement supérieure (35a) et une surface d'engagement inférieure (35b),
dans lequel le rail (17) comprend une partie de semelle supérieure (39) et une partie de semelle inférieure (41) et au moins une partie d'âme (43) connectant les parties de semelle supérieure et inférieure (39, 41),
dans lequel la surface d'engagement supérieure (35a) est prévue sur la partie de semelle supérieure (39) et la surface d'engagement inférieure (35b) est prévue sur la partie de semelle inférieure (41) ; et
dans lequel l'unité de rouleau (33) est agencée dans un évidement entre la partie de semelle supérieure et inférieure (39, 41) et s'engage avec la surface d'engagement (35a) prévue au niveau de la partie de semelle supérieure (39) et/ou la partie de semelle inférieure (41) ;
**caractérisé en ce que** la surface d'engagement supérieure (35a) s'étend de manière non parallèle à la surface d'engagement inférieure (35b) dans une direction latérale par rapport à l'axe longitudinal de rail (19).

14. Un aéronef (1) comprenant une aile (2) selon l'une quelconque des revendications 1 à 12, comprenant un ensemble hypersustentateur selon la revendication 13.
